# EUROPEAN PATENT SPECIFICATION

(11) **EP 3 438 998 B1**
(45) Date of publication and mention of the grant of the patent: **30.09.2020**
(21) Application number: 17184570.4
(22) Date of filing: 02.08.2017
(51) Int. Cl.: H01F 41/06, H01F 41/098, H02K 15/00, B23B 31/00

(54) **QUICK CHANGE ASSEMBLY FOR A COIL WINDING MACHINE**
SCHNELLWECHSELVORRICHTUNG FÜR EINE SPULENWICKELMASCHINE
ENSEMBLE À CHANGEMENT RAPIDE POUR UNE MACHINE D'ENROULEMENT DE BOBINE

(43) Date of publication of application: 06.02.2019
(73) Proprietor: Nortech System SA, 6828 Balerna (CH)
(72) Inventor: RIVARA, Antonio, 6828 Balerna (CH)
(74) Representative: M. Zardi & Co S.A.

(56) References cited:
- EP-A1- 3 185 264
- US-A1- 2009 090 807

## Description

### Field of application

The invention relates to the field of electric coil winding machines. More specifically, the invention relates to an assembly for quick change of tools for such a winding machine.

### Prior art

An electric coil winding machine essentially winds a conducting wire around a suitable support, for example a core or a reel. For this purpose, a winding machine comprises one or usually several spindles having fixed thereto the support about which the coil will be wound. During use, the support is rotated by the spindle and the wire is wound by means of suitable guiding devices.

The rotation speed of the spindles depends on the application, but is generally high, for example in modern winding machines it often exceeds 20,000 rpm.

The manufacturers of electrical components are increasingly required to respond to specific manufacturing needs and therefore need to rapidly replace the workpiece mounted on the spindle. This workpiece may be the support or optionally a specific tool intended in turn to receive the support.

On the other hand, securing of the workpiece to the spindle must be precise and reliable, so as to withstand the high speed of rotation and allow precise arrangement of the wire during winding.

The simple screw-type fixing systems are clearly unsuitable for satisfying the abovementioned requirement. For these reasons, the manufacturers of winding machines have developed quick change assemblies applicable to the spindles.

The quick change assemblies essentially have a main body, called engaging body, to be fixed to the spindle, and a pin which can be releasably coupled with the engaging body without screws or the like. The workpiece can be fixed to said pin directly or by means of a suitable tool.

The known quick change assemblies, however, are not entirely satisfactory.

A first known quick change assembly, termed lever-type assembly, has two pivotable levers on the sides of the body, which can fasten the pin by engaging a grooved profile of the same. Said two levers are kept in a normally open position, i.e. disengaged position, by respective springs; a conical piston inside the body acts on the levers bringing and keeping them in the locking position to retain the pin; engagement and release of the pin is obtained by operating the piston.

A drawback of this system is the considerable complexity of the main body including different moving parts and having a considerable size. For example, the pivotable side levers significantly increase the overall dimensions of the body and make it more delicate.

Another quick change assembly, termed ball-type, provides that the pin is locked by small spheres engaging with a groove of the pin itself. The spheres are in turn retained by a ring of a suitable shaped. The disengagement of the system requires to axially displace the ring into a position which releases the spheres and, consequently, releases the pin. In order to make the system reliable, however, the ring is opposed by strong springs acting in the axial direction of engagement of the pin.

A drawback of the ball-type system, therefore, is the need to overcome the resistance of the springs in the axial direction, for both engagement and disengagement, making the quick change uneasy to perform. Another drawback of this system is that it requires a very precise engagement between the pin and the body, which is therefore expensive; moreover this system also requires an engaging body with a rather complicated and bulky design.

Another system, known as elastic clamp type, has a body comprising a female part able to elastically grip the pin with a clamp action. This system, however, has also proved to be bulky and costly to produce. Another drawback of this system is that engagement is so hard that it can be used only with automatic operation, since the axial thrust is too high for a manual activation by the operator.

A further drawback found in the assemblies of the prior art is associated with the angular centering of the parts. The engaging body comprises two separate centering references, namely a front reference for centering with the pin and a rear reference (typically a dowel pin) for centering with the spindle. The two references are obtained by means of two different machining operations; their relative position must be very precise requiring expensive machining. In particular, the assemblies of the prior art, in order to form said two references, require two separate fixations of the workpiece on the machine tool, this being a drawback.

US 2009/0090807 A1 and EP 3 185 264 A1 disclose a quick change assembly for a coil winding machine as defined in the preamble of present claim 1.

### Summary of the invention

The invention aims to overcome the limitations and drawbacks of the prior art, which have been illustrated above.

A first object of the invention is to provide a quick change assembly for coil winding machines which allows engagement and disengagement of the pin in a simple and effortless manner.

Another object is to simplify the design of the engaging body.

Another object is to reduce the axial dimension of the assembly, in particular of the engaging body.

Another object is to provide a quick change assembly which can be used with great simplicity both manually by a machine operator or by automatic devices of the machine.

Another object is to provide a quick change assembly which ensures a high degree of precision of engagement between the rotating spindle and the tool, making the references with only one placement on a machine tool.

Another object is to allow a very high speed of rotation well above 20'000 rpm.

The objects of the invention are achieved with a quick change assembly for a coil winding machine, the assembly comprising:
an engaging body intended to be fixed to a spindle of the winding machine,
a pin engageable in said body along a predefined axis of engagement,
the pin being able to support a tool for use in the winding machine;
the pin being engageable in the body without a resilient opposition in the direction of said axis of engagement;
wherein the assembly also comprises a slider slidable inside a respective seat of the body, the sliding direction of the slider inside the body being perpendicular to the axis of engagement,
wherein said slider is configured to engage the pin when the pin reaches a position of full engagement inside the body, and the slider is displaceable manually between a position of engagement with the pin and a position of disengagement from the same pin, and the engagement with the slider is such as to axially retain the pin inside said body.

The engaging body, once fixed to the spindle, can be put in rotation by the spindle itself. The body has a main axis which is generally an axis of radial symmetry or substantial symmetry, and which coincides with the axis of rotation during use, as well as with the axis of engagement of the pin.

The head of the pin allows fixing of a workpiece realized according to a specific design, which can be for example a core for winding the coil, or a specific tool which in turn supports said core. For example, in one embodiment, the pin comprises a front flange which allows fixing of the workpiece with screws or equivalent means. It should however be noted that the details of the workpiece are not relevant for the purposes of the present invention.

The engaging body has a seat, for example a hole, adapted to receive the pin. The coupling between the pin and said seat is preferably a hole/shaft coupling precise but with clearance. In this way, a sliding but precise coupling is achieved. In a preferred embodiment, the pin has an essentially cylindrical portion received in a cylindrical hole of the body.

Preferably, the engagement between said slider and said pin is such as to also provide a rotational lock.

In a preferred embodiment, the engaging body comprises at least one resilient member, housed inside the body itself, arranged to oppose the sliding movement of the slider.

More preferably said at least one resilient member is arranged so as to keep the slider in the position engaged with the pin. Consequently, the slider is displaceable towards the disengaged position by overcoming the resilient biasing force.

Preferably, the engaged position of the slider is a retracted position inside the engaging body, while the disengaged position is partially extracted from the engaging body, wherein a portion of the slider protrudes from the body. Said portion of the slider can be used as a pushbutton for operating the slider and releasing the pin.

In a preferred embodiment, the slider and the engaging path of the pin are arranged in such a way that: the pin can reach a position of full engagement when the slider is in the disengaged position, and the pin reaches the position of full engagement abutting against one face of the slider itself.

Preferably the coupling between the slider and the respective seat is such as to prevent rotation of the slider. For example, the seat and the slider have a section to form a sliding coupling which however does not allow rotation of the slider inside the seat.

In a preferred embodiment, the slider and the pin are configured to engage only in a predefined angular position of the pin relative to the body, so that the engagement between the slider and the pin also provides that the pin itself is in a desired angular position of engagement.

Preferably, the engagement between said slider and said pin is such as to provide not only an axial, but also a rotational lock.

Preferably, said at least one resilient member comprises at least one helical spring. For example one or more springs are housed inside suitable seats inside the body so as to act on the slider. Said springs are preferably compressed when the slider is engaged with the pin, and are at rest when the slider is in the disengaged position.

The engagement between the slider and the pin is for example of the male/female type.

In a preferred embodiment, the slider comprises a first cam and the pin comprises a second cam, said two cams having a conjugate shape so as to engage with each other. In a particularly preferred embodiment, the slider comprises an essentially L-shaped bottom part designed to engage with a hook action a recess formed in the front part of the pin. In a preferred embodiment, the coupling between the two cams occurs by contact along planes inclined with respect to a plane perpendicular to the axis. The inclination of said plane preferably ranges from 1° to 45° and more preferably from 5° to 30°.

The invention has the first advantage of a rapid and effortless engagement. This result is achieved thanks to the engagement which is not opposed by springs or other resilient elements acting in the axial direction. Another advantage is the reduced axial dimension of the body and the constructional simplicity, compared to the known solutions. The engaging body, according to the invention, does not require complicated internal lever mechanisms nor requires particularly precise constructional tolerances. Locking of the pin by means of a slider sliding in the body allows a simple and compact realization of the assembly.

Engagement and disengagement are particularly easy; the resilient member biasing against the slider must not be particularly rigid and hard to actuate, due to the fact that it acts in a direction perpendicular to the engagement direction, and is only required to keep the engagement between slider and pin. The slider protruding from the top part of the body, which can be operated as a locking/unlocking button, makes the system of the invention particularly convenient and quick to use. The system according to the invention can be easily used both with manual operation and with automatic operation of the machine.

Moreover, the small axial dimension is advantageous in the winding machines, thus reducing the distance of the workpiece from the spindle.

In a preferred embodiment, the engaging body has a cylindrical front portion with a cylindrical hole and the pin has a shaft engageable with said hole. An advantage is that it is possible to obtain a relatively long cylindrical coupling between the pin and the body; consequently there is a long guided part and less precise tolerances may be used. Preferably said shaft carries, at the end, the cam for engaging with the slider.

In a further preferred embodiment, the engaging body has a centering reference which can be realized by means of a single machining operation and which extends along the entire axial length of the body. Said centering reference for example is in the form of a recess. Said centering reference is accessible both from the front side of the engaging body, which is the part intended to receive the pin, and from the rear side of the body, which faces the spindle. Consequently it acts as a reference both for centering the pin and the engaging body, and for centering said body and the spindle of the winding machine.

It should be noted that the invention eliminates the need to provide two different references (for example recesses or holes) on either side of the engaging body, something which in the prior art inevitably requires precise and costly machining operations. According to the invention it is possible to provide a single reference, preferably for example by means of electro-discharge machining. In this way a precise alignment is obtained without having to resort to costly machining.

In particular, it should be noted that, thanks to the invention, the rear reference for engagement with the rotating spindle and the front reference for engagement with the tool can be realized with a single fit on the machine tool, so as to ensure a very high degree of precision.

Another advantage of the invention is a secure engagement able to withstand high speeds of rotation, for example higher than 20,000 rpm. This advantage is achieved as a result of a long portion of the shaft of the movable tool being engaged in the fixed tool and, in a preferred embodiment, thanks to the fastening by coupling of inclined surfaces.

Overall the invention provides a substantially improved quick change system able to meet the needs and requirements of the clients.

The advantages of the invention will become clear with the aid of the following description relating to a preferred embodiment.

### Brief description of the figures

Fig. 1 shows an exploded view of the components of an assembly according to an embodiment of the invention.
Fig. 2 shows the components of Fig. 1 in the assembled condition.
Fig. 3 shows a cross-sectional view of the assembly, during engagement of the pin inside the body.
Fig. 4 shows a cross-sectional view of the assembly, when the pin reaches the fully engaged position.
Fig. 5 shows a cross-sectional view of the assembly, when the pin is retained by engagement with the slider.
Fig. 6 shows a detail of the engaging body of the assembly according to Fig. 1.
Fig. 7 shows the engaging body of Fig. 6 in a front view.
Fig. 8 shows an exploded view of the engaging body and the respective two centering dowels.
Fig. 9 is a detail of Fig. 4 which shows the engaging connection.

### Detailed description

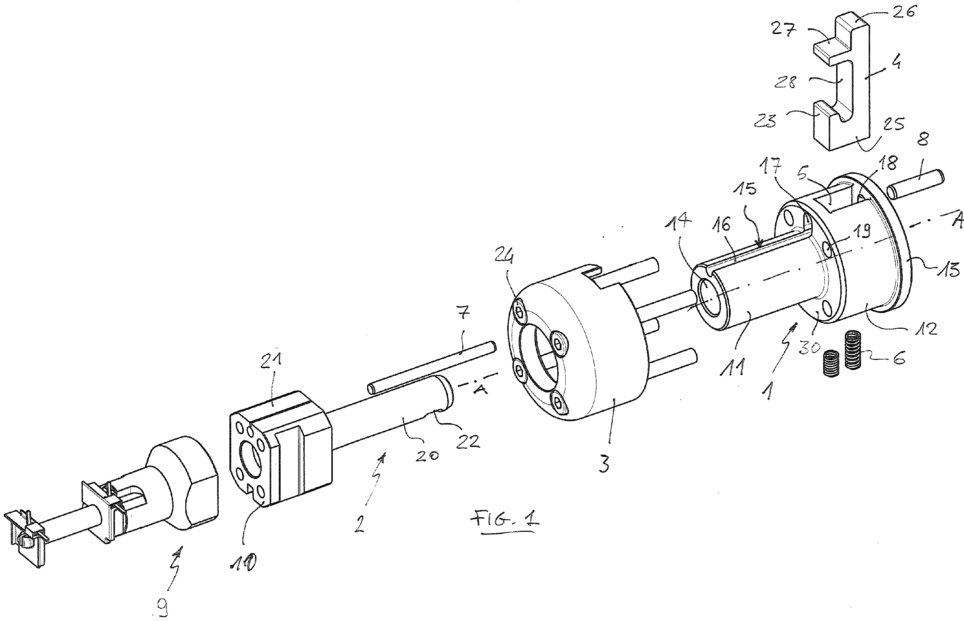

Fig. 1 shows the following components:
an engaging body 1 intended to be fixed to a spindle of a winding machine (not shown);
a pin 2 which can be engaged inside said body 1 along an axis A-A;
a flange 3 which can be mounted on the engaging body 1;
a slider 4 slidable inside a seat 5 of the engaging body 1, in a direction perpendicular to the axis A-A;
a pair of springs 6 housed inside the engaging body 1 and acting on the slider 4;
a first centering dowel pin 7 and a second centering dowel pin 8 intended respectively to centre the pin 2 with respect to the body 1, and the body 1 itself with respect to a spindle of the winding machine.

The figure also shows a workpiece 9 which can be fixed to a front flange 10 of the pin 2. Said workpiece 9 does not form part of the assembly according to the invention, being a part specifically designed for the operation to be performed. The workpiece 9 therefore is shown only for the purposes of providing an example of use of the engaging assembly.

Considering in greater detail the various components, the engaging body 1 comprises a cylindrical front part 11 and a base 12 terminating with a flange 13 for fixing to the spindle of the winding machine. Generally the base 12 is also cylindrical and has a diameter greater than the front part 11. The seat 5, which is intended to receive the slider 4, is formed in the base 12.

The seat 5 has an essentially rectangular shape, which matches the shape of the slider 4. Consequently the slider 4 can slide without rotation in the seat 5.

Said front part 11 has an axial hole 14 intended to receive the pin 2.

The engaging body 1 also has a centering reference - indicated generally by the number 15 - which extends along the whole length, i.e. along the front part 11 and the base 12, until the rear flange 13.

The reference 15 is formed by means of a single machining operation, for example electro-discharge machining, and forms essentially a first recess 16 along a directrix of the cylindrical part 11 and two further recesses 17, 18 through the base 12, more particularly on the front side 30 and on the rear flange 13 of said base 12.

It is thus possible to note that the reference 15, as a whole, extends over the entire axial length of the engaging body 1.

It should also be noted that the axis A-A, which may be termed main axis of the quick change assembly, coincides with the axis of rotation (when the assembly is mounted on the spindle).

The pin 2 has a shaft 20 slidably coupled with the hole 14. That is, in a preferred embodiment, the diameter of said shaft 20 is slightly smaller than the diameter of the hole 14, such that the pin 2 is engageable inside said hole in a guided and precise manner but without effort. As will be noted more clearly below, there is no resilient element to oppose the insertion of the pin 2 (that is of its shaft 20) inside the hole 14.

The pin 2 also has a head 21 which carries the flange 10 for fixing the workpiece 9.

The front part of the shaft 20 has a recess or a cam 22 adapted to engage with a corresponding cam 23 of the slider 4, as will be better illustrated below.

The flange 3 essentially is coupled with the base 12 of the engaging body 1 and comprises a series of screws 24 which are adapted to engage holes 19 of the body 1. Said flange 3 is not an essential part.

The slider 4 comprises a base 25 from which the cam 23 engaging with the pin 2 protrudes, and a head 26. The slider 4 also comprises: a tongue 27 which defines a top stop of the slider itself; a side 28 which defines a stop for the pin 2.

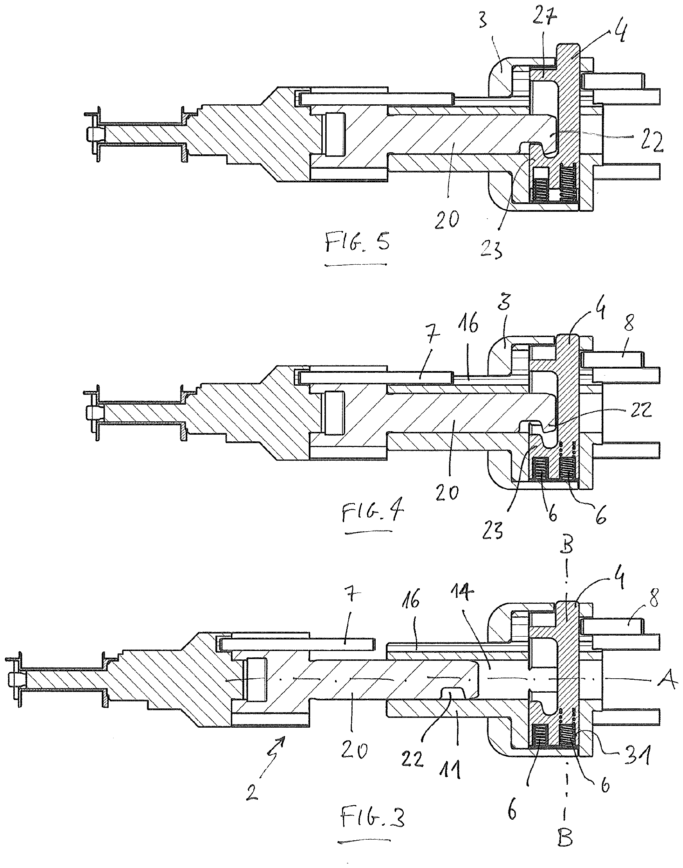

The base 25 preferably comprises seats (for example two holes) which are adapted to receive the springs 6. One of these seats 31 is shown in Fig. 3.

The slider is slidable between a position retracted inside the engaging body 1 and a partially extracted position, in which the head 26 protrudes from said seat 5.

The dowel pin 7 is received in the recess 16, acting as a centering and rotational locking element. The dowel pin 8 is received in the recess 18 of the flange 13.

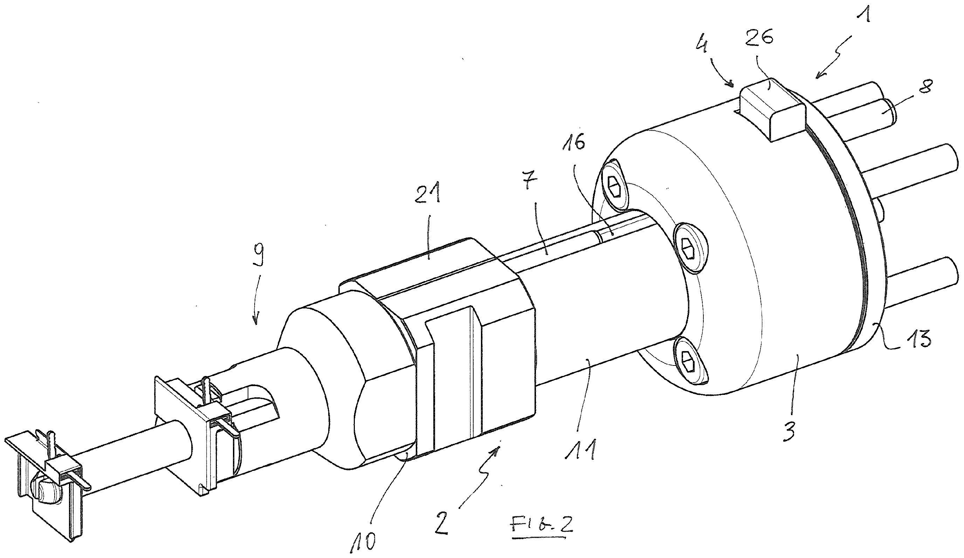

The assembly is shown in the assembled condition in Fig. 2, wherein the workpiece 9 fixed to the front flange 10 of the pin 2 is also shown for clarity.

The engagement of the pin 2 inside the body 1 is better illustrated by the sequence of Figs. 3, 4 and 5.

Fig. 3 shows a partially engaged position of the pin 2 inside the body 1. The slider 4, during this step, is manually lowered overcoming the force of the springs 6 which tend to push the slider upwards.

Fig. 3 also shows the axis B-B of movement of the slider which is perpendicular to the main axis A-A of the assembly.

Fig. 4 shows the pin 2 in the fully engaged position. In said fully engaged position, the cam 22 of the pin 2 faces the cam 23 of the slider 4. The cam 23 of the slider 4 however is unable to engage with the cam 22 of the pin 2, owing to the lowered position of the slider.

The dowel pin 7, engaging with the recess 16, acts as a means for guiding the pin 2. It can also be noted that the head of the pin 2 abuts against the face 28 of the slider 4, thus defining the end-of-travel position of the pin 2.

With reference now to Fig. 5, the slider 4, once released, moves into the raised position under the thrust of the springs 6, until the tongue 27 bears against the rim of the flange 3. Owing to the slider 4 moving upwards, the cam 23 can now engage with the corresponding cam 22, retaining the pin 2 inside the engaging body 1.

It should be noted that engagement of the pin 2 is guided precisely, but is not opposed by springs or other resilient members, thus being easy and effortless both when performed manually and automatically. Engagement is achieved only upon release of the slider 4, when the slider moves upwards reaching the position of Fig. 5.

The disengagement, starting from the position shown in Fig. 5, is performed by pressing the head 26 of the slider 4, so as to bring it into the lowered (retracted) position of Fig. 4; at that point the pin 2 can be easily extracted from the engaging body 1.

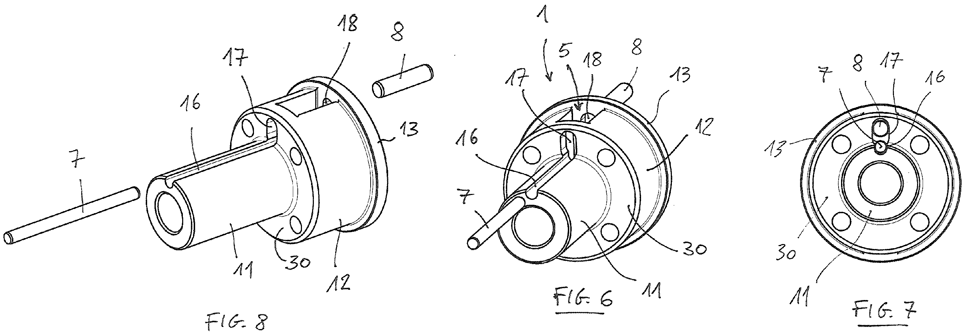

In Figs. 6 to 8 it is possible to see more clearly the location of the recesses 16, 17 and 18. In particular it is noted their alignment, the recesses being formed by means of the same machining operation. This allows particularly precise axial alignment of the assembly without requiring costly machining.

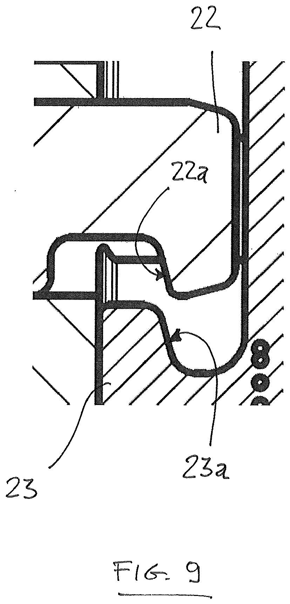

The figures show a preferred embodiment in which the cams 22 and 23 engage by means of contact along two inclined surfaces 22a, 23a. This feature can be seen in a greater detail in Fig. 9.

## Claims

1. Quick change assembly for a coil winding machine, comprising:
- an engaging body (1) intended to be fixed to a spindle of the winding machine,
- a pin (2) engageable in said body (1) along an axis (A-A) of engagement,
- the pin (2) being able to support a tool for use in the winding machine;
**characterised in that**
- the pin (2) is engageable in the body (1) without a resilient opposition in the direction of said axis (A-A) of engagement,
- wherein the assembly also comprises a slider (4) slidable inside a respective seat (5) of the body (1), in a direction (B-B) perpendicular to the axial direction (A-A) of engagement of the pin,
- wherein said slider (4) is formed so as to engage with the pin (2) when the pin (2) reaches a position of full engagement inside the body (1), and the slider (4) is displaceable manually between a position engaged with the pin and a position disengaged from said pin, and the engagement of the slider (4) is such as to axially retain the pin (2) inside said body (1).

2. Assembly according to claim 1, comprising at least one resilient member (6) arranged to oppose the sliding movement of the slider (4) inside the engaging body (1).

3. Assembly according to claim 2, wherein said at least one resilient member (6) is arranged to keep the slider in the position of engagement with the pin, and the engagement can be released by moving the slider into the disengaged position and overcoming the force of opposition of said at least one resilient member.

4. Assembly according to claim 2 or 3, wherein the position of engagement of the slider (4) is a position wherein the slider is retracted inside the engaging body (1), and the position of disengagement of the slider is a position wherein the slider is partially extracted from the engaging body (1) and a portion (26) of the slider protrudes from the body and can be used as a pushbutton for locking or unlocking the pin (2).

5. Assembly according to any one of claims 2 to 4, wherein said at least one resilient member comprises at least one helical spring (6).

6. Assembly according to any one of the preceding claims, wherein: the pin (2) can reach a position of full engagement inside the body (1) when the slider (4) is in the position of disengagement, and the pin reaches the position of full engagement by abutting against a face (28) of the slider.

7. Assembly according to any one of the preceding claims, wherein the engagement between the slider (4) and the respective seat (5) is such as to prevent rotation of the slider.

8. Assembly according to any one of the preceding claims, wherein the slider (4) and the pin (2) are configured so as to engage only in a predefined angular position of the pin with respect to the body.

9. Assembly according to any one of the preceding claims, wherein the engagement between said slider (4) and said pin (2) is such as to also provide a rotational lock.

10. Assembly according to any one of the preceding claims, wherein the pin (2) comprises a first cam (22) and the slider (4) comprises a second cam (23), said first cam and second cam having a conjugate shape and being suitable to engage with each other.

11. Assembly according to claim 10, wherein said first cam (22) and second cam (23) engage with each other by means of contact along planes (22a, 23a) which are inclined with respect to a plane perpendicular to the axis (A-A) of engagement.

12. Assembly according to any one of the preceding claims, wherein the engaging body (1) has a centering reference (15) which can be realized by means of a single machining operation, preferably electro-discharge machining, and which extends along the full axial length of the engaging body (1).

13. Assembly according to claim 12, wherein said reference comprises at least one front recess (16) adapted to act as a centering reference for the pin (2), and a rear recess (18) adapted to act as a centering reference for mounting the engaging body (1) on a spindle of a winding machine.

14. Assembly according to any one of the preceding claims, wherein the engaging body has a cylindrical front portion (11) with a hole (14) and the pin (2) has a shaft (20) engageable inside said hole (14).

15. Electric coil winding machine, comprising at least one spindle and comprising a quick change assembly according to any one of the preceding claims.

## Patentansprüche

1. Schnellwechselvorrichtung für eine Spulenwickelmaschine, umfassend:
- einen Eingriffskörper (1), der dazu bestimmt ist, an einer Spindel der Wickelmaschine befestigt zu werden,
- einen Stift (2), der in den Körper (1) entlang einer Eingriffsachse (A-A) eingreifbar ist,
- der Stift (2) ist in der Lage, ein Werkzeug zur Verwendung in der Wickelmaschine zu tragen; **dadurch gekennzeichnet, dass**
- der Stift (2) in den Körper (1) ohne eine elastische Gegenkraft in der Richtung der Eingriffsachse (A-A) in Eingriff bringbar ist,
- wobei die Vorrichtung auch einen Schieber (4) umfasst, der innerhalb eines entsprechenden Sitzes (5) des Körpers (1) in einer Richtung (B-B) senkrecht zur axialen Eingriffsrichtung (A-A) des Stiftes verschiebbar ist,
- wobei der Schieber (4) so ausgebildet ist, dass er mit dem Stift (2) in Eingriff kommt, wenn der Stift (2) eine Position des vollständigen Eingriffs innerhalb des Körpers (1) erreicht, und der Schieber (4) manuell verschiebbar ist zwischen einer Position, in der er mit dem Stift in Eingriff steht, und einer Position, in der er von dem Stift gelöst ist, und wobei der Eingriff des Schiebers (4) derart ist, dass der Stift (2) axial innerhalb des Körpers (1) verbleibt.

2. Vorrichtung nach Anspruch 1, umfassend mindestens ein elastisches Element (6), das so angeordnet ist, dass es der Gleitbewegung des Schiebers (4) innerhalb des Eingriffskörpers (1) entgegenwirkt.

3. Vorrichtung nach Anspruch 2, wobei das mindestens eine elastische Element (6) so angeordnet ist, dass es den Schieber in der Position des Eingriffs mit dem Stift hält, und der Eingriff gelöst werden kann durch Bewegen des Schiebers in die ausgerückte Position und Überwinden der Widerstandskraft des mindestens einen elastischen Elements.

4. Vorrichtung nach Anspruch 2 oder 3, wobei die Eingriffsposition des Schiebers (4) eine Position ist, in der der Schieber in den Eingriffskörper (1) zurückgezogen ist, und die ausgerückte Position des Schiebers eine Position ist, in der der Schieber teilweise aus dem Eingriffskörper (1) herausgezogen ist und ein Abschnitt (26) des Schiebers aus dem Körper herausragt und als Druckknopf zum Verriegeln oder Entriegeln des Stiftes (2) verwendet werden kann.

5. Vorrichtung nach einem der Ansprüche 2 bis 4, wobei das mindestens eine elastische Element mindestens eine Schraubenfeder (6) umfasst.

6. Vorrichtung nach einem der vorstehenden Ansprüche, wobei: der Stift (2) eine Position des vollen Eingriffs im Inneren des Körpers (1) erreichen kann, wenn sich der Schieber (4) in der ausgerückten Position befindet, und der Stift die Position des vollen Eingriffs erreicht, indem er gegen eine Fläche (28) des Schiebers stößt.

7. Vorrichtung nach einem der vorstehenden Ansprüche, wobei der Eingriff zwischen dem Schieber (4) und dem jeweiligen Sitz (5) so erfolgt, dass eine Drehung des Schiebers verhindert wird.

8. Vorrichtung nach einem der vorstehenden Ansprüche, wobei der Schieber (4) und der Stift (2) so konfiguriert sind, dass sie nur in einer vordefinierten Winkelposition des Stiftes in Bezug auf den Körper eingreifen.

9. Vorrichtung nach einem der vorstehenden Ansprüche, wobei der Eingriff zwischen dem Schieber (4) und dem Stift (2) so ist, dass auch eine Drehsperre entsteht.

10. Vorrichtung nach einem der vorstehenden Ansprüche, wobei der Stift (2) einen ersten Nocken (22) und der Schieber (4) einen zweiten Nocken (23) umfasst, wobei der erste Nocken und der zweite Nocken eine konjugierte Form aufweisen und geeignet sind, miteinander in Eingriff zu kommen.

11. Vorrichtung nach Anspruch 10, wobei der erste Nocken (22) und der zweite Nocken (23) durch Kontakt entlang Ebenen (22a, 23a) miteinander in Eingriff stehen, die in Bezug auf eine Ebene senkrecht zur Eingriffsachse (A-A) geneigt sind.

12. Vorrichtung nach einem der vorstehenden Ansprüche, wobei der Eingriffskörper (1) eine Zentrierreferenz (15) aufweist, die durch einen einzigen Bearbeitungsvorgang, vorzugsweise durch Elektroentladungsbearbeitung, realisiert werden kann und die sich über die volle axiale Länge des Eingriffskörpers (1) erstreckt.

13. Vorrichtung nach Anspruch 12, wobei die Referenz mindestens eine vordere Aussparung (16) umfasst, die als Zentrierreferenz für den Stift (2) dienen kann, und eine hintere Aussparung (18), die als Zentrierreferenz für die Montage des Eingriffskörpers (1) auf einer Spindel einer Wickelmaschine dienen kann.

14. Vorrichtung nach einem der vorstehenden Ansprüche, wobei der Eingriffskörper einen zylindrischen vorderen Abschnitt (11) mit einem Loch (14) und der Stift (2) einen Schaft (20) aufweist, der in das Loch (14) eingreifbar ist.

15. Elektrische Spulenwickelmaschine, umfasst mindestens eine Spindel und eine Schnellwechselvorrichtung nach einem der vorstehenden Ansprüche.

## Revendications

1. Ensemble à changement rapide pour une machine d'enroulement de bobine comprenant :
- un corps de mise en prise (1) prévu pour être fixé sur une tige de la machine d'enroulement,
- une broche (2) pouvant se mettre en prise dans ledit corps (1) le long d'un axe (A-A) de mise en prise,
- la broche (2) pouvant supporter un outil destiné à être utilisé dans la machine d'enroulement ;
**caractérisé en ce que** :
- la broche (2) peut se mettre en prise dans le corps (1) sans opposition résiliente dans la direction dudit axe (A-A) de mise en prise,
- l'ensemble comprenant également une glissière (4) pouvant coulisser à l'intérieur d'un siège (5) respectif du corps (1), dans une direction (B-B) perpendiculaire à la direction axiale (A-A) de mise en prise de la broche,
- dans lequel ladite glissière (4) est formée afin de se mettre en prise avec la broche (2) lorsque la broche (2) atteint une position de mise en prise complète à l'intérieur du corps (1), et la glissière (4) est déplaçable manuellement entre une position mise en prise avec la broche et une position dégagée de ladite broche, et la mise en prise de la glissière (4) est telle qu'elle retient axialement la broche (2) à l'intérieur dudit corps (1) .

2. Ensemble selon la revendication 1, comprenant au moins un élément résilient (6) agencé pour s'opposer au mouvement de coulissement de la glissière (4) à l'intérieur du corps de mise en prise (1).

3. Ensemble selon la revendication 2, dans lequel ledit au moins un élément résilient (6) est agencé pour maintenir la glissière dans la position de mise en prise avec la broche, et la mise en prise peut être libérée en déplaçant la glissière dans la position dégagée et venir à bout de la force d'opposition dudit au moins un élément résilient.

4. Ensemble selon la revendication 2 ou 3, dans lequel la position de mise en prise de la glissière (4) est une position dans laquelle la glissière est rétractée à l'intérieur du corps de mise en prise (1), et la position de dégagement de la glissière est une position dans laquelle la glissière est partiellement extraite du corps de mise en prise (1) et une partie (26) de la glissière fait saillie du corps et peut être utilisée en tant que bouton-poussoir pour verrouiller ou déverrouiller la broche (2) .

5. Ensemble selon l'une quelconque des revendications 2 à 4, dans lequel ledit au moins un élément résilient comprend au moins un ressort hélicoïdal (6).

6. Ensemble selon l'une quelconque des revendications précédentes, dans lequel : la broche (2) peut atteindre une position de mise en prise complète à l'intérieur du corps (1) lorsque la glissière (4) est dans la position de dégagement, et la broche atteint la position de mise en prise complète en venant en butée contre une face (28) de la glissière.

7. Ensemble selon l'une quelconque des revendications précédentes, dans lequel la mise en prise entre la glissière (4) et le siège (5) respectif est telle qu'elle empêche la rotation de la glissière.

8. Ensemble selon l'une quelconque des revendications précédentes, dans lequel la glissière (4) et la broche (2) sont configurées pour se mettre en prise uniquement dans une position angulaire prédéfinie de la broche par rapport au corps.

9. Ensemble selon l'une quelconque des revendications précédentes, dans lequel la mise en prise entre ladite glissière (4) et ladite broche (2) est telle qu'elle fournit également un verrouillage rotatif.

10. Ensemble selon l'une quelconque des revendications précédentes, dans lequel la broche (2) comprend une première came (22) et la glissière (4) comprend une seconde came (23), lesdites première came et seconde came ayant une forme conjuguée et étant appropriées pour se mettre en prise entre elles.

11. Ensemble selon la revendication 10, dans lequel lesdites première came (22) et seconde came (23) se mettent en prise entre elles au moyen du contact le long des plans (22a, 23a) qui sont inclinés par rapport à un plan perpendiculaire à l'axe (A-A) de mise en prise.

12. Ensemble selon l'une quelconque des revendications précédentes, dans lequel le corps de mise en prise (1) a une référence de centrage (15) qui peut être réalisée au moyen d'une seule opération d'usinage, de préférence l'usinage par étincelage, et qui s'étend le long de toute la longueur axiale du corps de mise en prise (1).

13. Ensemble selon la revendication 12, dans lequel ladite référence comprend au moins un évidement avant (16) adapté pour servir de référence de centrage pour la broche (2), et un évidement arrière (18) adapté pour servir de référence de centrage pour monter le corps de mise en prise (1) sur une tige d'une machine d'enroulement.

14. Ensemble selon l'une quelconque des revendications précédentes, dans lequel le corps de mise en prise a une partie avant cylindrique (11) avec un trou (14) et la broche (2) a une tige (20) pouvant se mettre en prise à l'intérieur dudit trou (14).

15. Machine d'enroulement de bobine électrique comprenant au moins une tige et comprenant un ensemble à changement rapide selon l'une quelconque des revendications précédentes.
